# EUROPEAN PATENT APPLICATION

(11) **EP 3 554 126 A1**
(43) Date of publication of application: **16.10.2019**
(21) Application number: 17888982.0
(22) Date of filing: 25.12.2017
(51) Int. Cl.: H04W 28/18

(54) **UPLINK TRANSMISSION METHOD, APPARATUS AND SYSTEM**

(30) Priority: 30.12.2016 CN 201611263791
(71) Applicant: Huawei Technologies Co., Ltd., Longgang District Shenzhen, Guangdong 518129 (CN)
(72) Inventor: ZHANG, Leiming, Shenzhen Guangdong 518129 (CN); LIU, Yifan, Shenzhen Guangdong 518129 (CN); LEI, Ming, Shenzhen Guangdong 518129 (CN)
(74) Representative: Thun, Clemens
(86) International application number: PCT/CN2017/118371
(87) International publication number: WO 2018/121484

(57) **Abstract**

This application relates to the field of mobile communications, and in particular, to an uplink transmission process in a wireless communications system. The method includes: determining, by a base station, forming information that is from an uplink measurement reference signal port to an antenna port; and sending, to user equipment, the forming information that is from the uplink measurement reference signal port to the antenna port. The user equipment may obtain the forming information that is from the uplink measurement reference signal port to the antenna port. The forming information may be used for performing forming processing on a transmission signal during uplink transmission. Through the forming processing on the transmission signal, coverage of the transmission signal can be increased, and efficiency of data transmission can be improved.

## Description

This application claims priority to Chinese Patent Application 201611263791.2, filed with the Chinese Patent Office on December 30, 2016 and entitled "UPLINK TRANSMISSION METHOD, APPARATUS, AND SYSTEM", which is incorporated herein by reference in its entirety.

### TECHNICAL FIELD

The present invention relates to the field of mobile communications, and in particular, to an uplink transmission technology in a wireless communications system.

### BACKGROUND

In an LTE (Long Term Evolution, LTE) system, a sounding reference signal (Sounding reference signal, SRS) is mainly used for uplink channel measurement, and may further be used for downlink channel measurement if channel reciprocity is met. The SRS may be specifically an uplink measurement reference signal. However, a terminal has a small size and low costs, a quantity of uplink measurement reference signal ports is relatively small, to be specific, one or two, and typically, sending on only one antenna port is supported. Therefore, in the LTE system, for an uplink measurement reference signal port, optimized transmission is not considered.

In discussions about a 5th Generation New Radio (5th Generation New Radio, 5G NR) technology, and in particular, in a high-frequency communication scenario, a quantity of antennas of a terminal is sharply increased, and a quantity of uplink measurement reference signal ports is also correspondingly increased. Accordingly, an uplink measurement reference signal occupies more uplink time-frequency resources, and consumes more uplink power. In addition, in the high-frequency scenario, uplink measurement reference signal coverage is also a problem.

In the prior art, uplink scheduling signaling sent by a base station to a terminal includes a precoding matrix indicator (Precoding Matrix indicators, PMI). However, there are a plurality of uplink measurement reference signal resources, and the terminal obtains only the PMI sent by the base station, and does not know to specifically use which uplink measurement reference signal resource. Therefore, the terminal cannot obtain complete forming information, and cannot efficiently transmit data.

### SUMMARY

This specification describes an uplink transmission method, an apparatus, and a system, to efficiently transmit data in the system.

According to an aspect, an embodiment of this application provides an uplink transmission method. The method includes: determining, by a base station, forming information that is from an uplink measurement reference signal port to an antenna port (where the forming information from the uplink measurement reference signal port to the antenna port may be determined in a plurality of forming information from an uplink measurement reference signal port to a antenna port); and sending, to user equipment, the forming information that is from the uplink measurement reference signal port to the antenna port. The user equipment may obtain the forming information that is from the uplink measurement reference signal port to the antenna port and that is sent by the base station, and obtain the forming information. The forming information may be used for performing forming processing on a transmission signal during uplink transmission. Through the forming processing on the transmission signal, coverage of the transmission signal can be increased, and efficiency of data transmission can be improved. In addition, the forming information may be in various forms, for example, a forming parameter, a codeword index, or an uplink measurement reference signal index. In this way, diversity of an uplink transmission solution is increased.

In a possible design, the base station may send, to the user equipment in a plurality of manners, the forming information that is from the uplink measurement reference signal port to the antenna port. For example, the base station sends, to the user equipment by using uplink scheduling signaling, a media access control MAC control element CE, higher layer signaling, or the like, the forming information that is from the uplink measurement reference signal port to the antenna port. Correspondingly, the user equipment obtains, in a plurality of manners, the forming information that is from the uplink measurement reference signal port to the antenna port and that is sent by the base station. Sending the forming information to the user equipment in different manners can enable the base station to implement the solution of this embodiment of the present invention in a plurality of scenarios.

In a possible design, the base station may further determine forming information that is from a data port to the uplink measurement reference signal port; and then send, to the user equipment, the forming information that is from the data port to the uplink measurement reference signal port. Correspondingly, the user equipment obtains the forming information that is from the data port to the uplink measurement reference signal port and that is sent by the base station. Usually, the forming information from the data port to the uplink measurement reference signal port corresponds to the forming information from the uplink measurement reference signal port to the antenna port. An effective beam can be formed only when the two pieces of forming information are correctly matched, thereby improving efficiency of uplink transmission. The base station sends the two pieces of forming information to the user equipment. In this way, the user equipment can own the forming information that is from the data port to the uplink measurement reference signal port and the forming information that is from the uplink measurement reference signal port to the antenna port, thereby implementing forming processing on a transmission signal.

In a possible design, the base station may send, to the user equipment by using uplink scheduling signaling, the forming information that is from the data port to the uplink measurement reference signal port, or the base station may send, to the user equipment by using uplink scheduling signaling, both the forming information that is from the data port to the uplink measurement reference signal port and the forming information that is from the uplink measurement reference signal port to the antenna port. Correspondingly, the user equipment may receive, by using uplink scheduling signaling, the forming information that is from the data port to the uplink measurement reference signal port, or both the forming information that is from the data port to the uplink measurement reference signal port and the forming information that is from the uplink measurement reference signal port to the antenna port.

In a possible design, the user equipment parses the received forming information that is from the uplink measurement reference signal port to the antenna port, and obtains a forming parameter corresponding to the forming information. For example, the user equipment uses, as forming information used for a current data transmission, a forming parameter corresponding to forming information that is used for the last transmission of an uplink measurement reference signal to the base station within X time units before the current data transmission.

In a possible design, because specific forms of the forming information are different, there are different manners of obtaining, by the user equipment, the forming parameter corresponding to the forming information. For example, the user equipment determines, when the forming information is specifically a codeword index, a forming parameter corresponding to the codeword index. Alternatively, when the forming information is an uplink measurement reference signal index, the user equipment determines, based on a number of the uplink measurement reference signal index, a forming parameter used for sending the uplink measurement reference signal, and uses, as the forming information that is from the uplink measurement reference signal port to the antenna port and that is used by the user equipment in the current data transmission, the forming parameter used for sending the uplink measurement reference signal. For different forms of the forming information, the user equipment may obtain, in different manners, the forming parameter corresponding to the forming information.

In a possible design, the user equipment performs forming processing by using the obtained forming parameter that is from the uplink measurement reference signal port to the antenna port and an obtained forming parameter that is from the data port to the uplink measurement reference signal port. A transmission signal obtained after the forming processing is strengthened, and efficiency of data transmission is improved.

According to another aspect, an embodiment of the present invention provides a base station. The base station has a function of implementing behaviors of the base station in the foregoing method. The function may be implemented by hardware, or may be implemented by hardware executing corresponding software. The hardware or software includes one or more modules corresponding to the foregoing function.

In a possible design, a structure of the base station includes a processor and a transmitter. The processor is configured to support the base station in executing a corresponding function in the foregoing method. The transmitter is configured to: support communication between the base station and user equipment, and send, to the user equipment, information or an instruction related to the method. The base station may further include a memory. The memory is configured to couple to the processor, and the memory stores a necessary program instruction and necessary data of the base station.

According to still another aspect, an embodiment of the present invention provides user equipment. The user equipment has a function of implementing behaviors of the user equipment in the foregoing method designs. The function may be implemented by hardware, or may be implemented by hardware executing corresponding software. The hardware or software includes one or more modules corresponding to the foregoing function. The modules may be software and/or hardware.

In a possible design, a structure of the user equipment includes a receiver and a processor. The receiver is configured to receive forming information that is from an uplink measurement reference signal port to an antenna port and that is sent by a base station. The processor is configured to: parse the forming information that is from the uplink measurement reference signal port to the antenna port, and obtain a forming parameter corresponding to the forming information.

According to still another aspect, an embodiment of the present invention provides a communications system. The system includes the base station and the user equipment according to the foregoing aspects.

According to yet another aspect, an embodiment of the present invention provides a computer storage medium, configured to store computer software instructions used by the foregoing base station. The computer storage medium contains a program designed for executing the foregoing aspects.

According to yet another aspect, an embodiment of the present invention provides a computer storage medium, configured to store computer software instructions used by the foregoing user equipment. The computer storage medium contains a program designed for executing the foregoing aspects.

Compared with the prior art, the solutions provided in the present invention can further increase coverage of a transmission signal, thereby improving efficiency of data transmission.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description merely show some embodiments of the present invention, and a person of ordinary skill in the art can derive other implementations of the present invention from these accompanying drawings without creative efforts. All of the embodiments or the implementations shall fall within the protection scope of the present invention.
FIG. 1 is a schematic diagram of a possible application scenario according to the present invention;
FIG. 2 is a schematic diagram of communication of a terminal transmitting data according to an embodiment of the present invention;
FIG. 3 is a schematic flowchart of uplink transmission according to an embodiment of the present invention;
FIG. 4 is a schematic flowchart of uplink transmission according to an embodiment of the present invention;
FIG. 5 is a schematic structural diagram of a base station according to an embodiment of the present invention; and
FIG. 6 is a schematic structural diagram of UE according to an embodiment of the present invention.

### DESCRIPTION OF EMBODIMENTS

Network architectures and service scenarios described in the embodiments of the present invention aim to more clearly describe the technical solutions in the embodiments of the present invention, but are not intended to limit the technical solutions provided in the embodiments of the present invention. A person of ordinary skill in the art may know that as the network architectures evolve and a new service scenario emerges, the technical solutions provided in the embodiments of the present invention are also applicable to a similar technical problem.

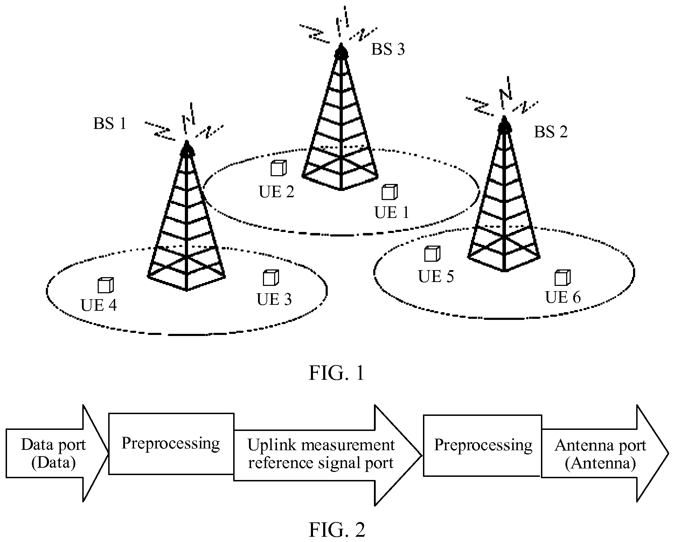

As shown in FIG. 1, user equipment UE is connected to a base station near the UE, thereby accessing a network. A technology described in the present invention may be applicable to a long term evolution (Long Term Evolution, LTE) system, or another wireless communications system that uses various radio access technologies, for example, a system that uses an access technology such as code division multiple access, frequency division multiple access, time division multiple access, orthogonal frequency division multiple access, or single carrier frequency division multiple access. In addition, the technology may further be applicable to a subsequent system evolving from the LTE system, for example, a 5th Generation 5G system.

In this application, terms "network" and "system" are often alternately used, but a person skilled in the art may understand the meaning thereof. User equipment UE in this application may include various handheld devices, in-vehicle devices, wearable devices, and computing devices that have a wireless communication function, or other processing devices connected to a wireless modem, and various forms of user equipments (User Equipment, UE), mobile stations (Mobile station, MS), terminals (terminal), terminal devices (Terminal Equipment), and the like. For ease of description, in this application, the devices mentioned above are collectively referred to as user equipment or UE. A base station (base station, BS) in the present invention is an apparatus that is deployed in a radio access network and that is configured to provide a wireless communication function for the UE. The base station may include various forms of macro base stations, micro base stations, relay stations, access points, and the like. In a system using different radio access technologies, names of a device having a function of the base station may be different. For example, in an LTE network, the device is referred to as an evolved NodeB (evolved NodeB, eNB or eNodeB), in a 3rd Generation 3G network, the device is referred to a NodeB (NodeB), and so on. For ease of description, in this application, all the foregoing apparatuses that provide a wireless communication function for the UE are referred to as a base station or BS.

To more clearly describe the technical solutions, the following first describes a process of performing processing by user equipment when the user equipment transmits data to a base station. In a solution shown in FIG. 2, in the process in which the user equipment transmits the data to the base station, the user equipment preprocesses a transmission signal twice: preprocessing from a data port to an uplink measurement reference signal port and preprocessing from the uplink measurement reference signal port to an antenna port. That the user equipment preprocesses the transmission signal for data transmission may be understood as that the user equipment multiplies the transmission signal by a set of forming parameters. In this way, the transmission signal can be strengthened in a direction, coverage can be increased, or the like. A forming parameter may also be referred to as a precoding matrix or a forming matrix. There are two types of precoding matrices. One type of precoding matrix is used for the preprocessing from the data port to the uplink measurement reference signal port, and the other type of precoding matrix is used for the preprocessing from the uplink measurement reference signal port to the antenna port. In the embodiments of the present invention, the precoding matrix from the uplink measurement reference signal port to the antenna port has two dimensions, and sizes in the two dimensions are a quantity of uplink measurement reference signal ports and a quantity of antenna ports respectively. The precoding matrix from the data port to the uplink measurement reference signal port has two dimensions, and sizes in the two dimensions are a quantity of data ports and a quantity of uplink measurement reference signal ports respectively.

For ease of description, in the embodiments of the present invention, the precoding matrix that is from the uplink measurement reference signal port to the antenna port and that is used by the user equipment to send data to the base station is referred to as an antenna precoding matrix or simply a TP, and the precoding matrix that is from the data port to the uplink measurement reference signal port and that is used by the user equipment to send data to the base station is referred to as a data precoding matrix or simply a DP. Usually, the TP corresponds to the DP, and the TP and the DP appear in pairs. The user equipment may transmit data to the base station through TP^{∗}DP forming processing.

Typically, energy of the transmission signal can be concentrated in a particular direction through preprocessing. For example, energy P of a transmission signal is sent in all directions, and energy in a particular direction is P/n (where it is assumed that all the directions are n particular directions). If transmission energy may be concentrated in a particular direction after the transmission signal is preprocessed, the energy in the particular direction may be approximately P. In this way, the energy in the particular direction is increased. Naturally, coverage in the direction is increased, and coverage of the transmission signal is also increased.

Different forming parameters may be configured under different channel conditions. The channel conditions may be spatial features of a channel, for example, an angle of arrival (angle of arrival, AOA) and an angle of departure (angle of departure, AOD). The channel condition may alternatively be a signal-to-noise ratio (signal-to-noise ratio, SNR) existing when the base station receives an uplink measurement reference signal. For example, when the channel condition is an SNR existing when the base station receives an uplink measurement reference signal, and a user is at a cell edge, the SNR existing when the base station receives the uplink measurement reference signal is usually less than a threshold. Therefore, the base station may configure a quantity of antenna ports for the user equipment to send an uplink measurement reference signal as a half of a maximum quantity of ports of the user equipment. When the user is in a cell center, the SNR existing when the base station receives the uplink measurement reference signal may be greater than a threshold. Therefore, the base station may configure a quantity of antenna ports for the user equipment to send an uplink measurement reference signal as a maximum quantity of ports of the user equipment.

The following further describes, with reference to more accompanying drawing, the solutions provided in the embodiments of the present invention.

The following describes two processes in which user equipment transmits data to a base station.

A first data transmission process specifically includes the following steps.

In part 301, within a period of time, the base station sends a set of uplink measurement reference signal resource configuration information to the user equipment.

The uplink measurement reference signal resource configuration information may also be referred to as uplink measurement reference signal process configuration information or uplink measurement reference signal configuration information. The uplink measurement reference signal resource configuration information includes forming information that is from an uplink measurement reference signal port to an antenna port and that is used by the user equipment to transmit data to the base station. The forming information may alternatively be referred to as preprocessing information. In the embodiments of the present invention, the forming information may include a forming parameter or a codeword index. The base station may periodically or aperiodically send the uplink measurement reference signal resource configuration information to the user equipment. The forming parameter may be specifically a precoding matrix, and the codeword index may be specifically a PMI. The user equipment may determine a precoding matrix by using the PMI.

The base station may send the uplink measurement reference signal resource configuration information to the user equipment by using higher layer signaling, a media access control (Media Access Control, MAC) control element (control element, CE), or physical layer signaling.

In part 302, the user equipment receives the uplink measurement reference signal resource configuration information sent by the base station, parses the uplink measurement reference signal resource configuration information, and obtains an antenna precoding matrix, namely, a TP, that is from an uplink measurement reference signal port to an antenna port. The user equipment may further send an uplink measurement reference signal based on the uplink measurement reference signal resource configuration information that is sent by the base station.

The base station may receive the uplink measurement reference signal sent by the user equipment. When the base station needs to instruct a terminal to perform uplink data transmission, the base station may estimate a current channel between the base station and the user equipment by using the uplink measurement reference signal. The base station may determine forming information from a data port to the uplink measurement reference signal port based on a channel estimation result. The user equipment may periodically send the uplink measurement reference signal. In other words, the base station may periodically receive the uplink measurement reference signal sent by the terminal. The base station may determine the forming information that is from the data port to the uplink measurement reference signal port by performing channel estimation once by using the uplink measurement reference signal. Alternatively, the base station may determine the forming information that is from the data port to the uplink measurement reference signal port by performing integrated channel estimation at least twice by using the uplink measurement reference signal.

If the forming information is specifically a precoding matrix, the precoding matrix is a TP. If the forming information is specifically a PMI, the user equipment may determine a precoding matrix corresponding to the PMI by using the PMI, and use the precoding matrix as a TP that is used by the user equipment to send the uplink measurement reference signal.

In part 303, the base station sends uplink scheduling signaling to the user equipment, where the uplink scheduling signaling includes forming information that is from a data port to the uplink measurement reference signal port.

When the base station needs to instruct the terminal to send data to the base station or needs to receive uplink scheduling request signaling sent by the terminal, the base station sends the uplink scheduling signaling to the user equipment.

There is no sequential relationship between parts 302 and 303.

In part 304, the user equipment receives the uplink scheduling signaling, obtains the forming information that is from the data port to the uplink measurement reference signal port, parses the forming information that is from the data port to the uplink measurement reference signal port, and obtains a DP. The user equipment preprocesses a transmission signal based on the TP and the DP, thereby transmitting data to the base station.

Similarly, if the forming information is specifically a precoding matrix, the precoding matrix is a DP. If the forming information is specifically a PMI, the user equipment may determine a precoding matrix corresponding to the PMI by using the PMI, and use the precoding matrix as a DP that is used by the user equipment in a current data transmission.

The user equipment may use, as a TP used for the current data transmission, a TP corresponding to an uplink measurement reference signal resource used for the last transmission, performed by the user equipment, of an uplink measurement reference signal to the base station within X time units (for example, subframes) before the current data transmission, where X may be agreed according to a protocol, for example, may be 0 and 10 ms. X may alternatively be configured by using higher layer signaling.

In a scenario in which an uplink measurement reference signal resource semi-statically changes in the embodiments of the present invention, coverage of an uplink measurement reference signal is optimized and overheads of the uplink measurement reference signal are reduced. For example, when the user is in the cell center, the user can obtain sufficient channel information in an existing uplink measurement reference signal transmission manner (that is, preprocessing is not performed from the uplink measurement reference signal port to the antenna port). When the user is at the cell edge, coverage of the uplink measurement reference signal can be increased in a beamformed uplink measurement reference signal transmission manner (that is, preprocessing is performed from the uplink measurement reference signal port to the antenna port), to be specific, transmission energy of the uplink measurement reference signal is concentrated in a particular direction or a quantity of ports is relatively small. In a scenario in which an uplink measurement reference signal resource dynamically changes in the embodiments of the present invention, coexistence of a plurality of uplink measurement reference signal resources is not required in such a flexible switching mechanism. Therefore, the overheads of the uplink measurement reference signal can be further reduced.

The following describes a second data transmission process. The data transmission process may adapt to a scenario in which a terminal may be configured with a plurality of uplink measurement reference signal resources for an uplink measurement reference signal within a same period of time. The data transmission process specifically includes the following steps.

In part 401, the base station sends uplink scheduling signaling to the user equipment, where the uplink scheduling signaling may include forming information that is from an uplink measurement reference signal port to an antenna port and forming information that is from a data port to the uplink measurement reference signal port. The forming information from the uplink measurement reference signal port to the antenna port and the forming information from the data port to the uplink measurement reference signal port may be encoded separately, or may be encoded jointly.

If the forming information from the uplink measurement reference signal port to the antenna port is specifically a precoding matrix, the precoding matrix is a TP. If the forming information is specifically a PMI, the user equipment may determine a precoding matrix corresponding to the PMI by using the PMI, and use the precoding matrix as a TP that is used by the user equipment in a current data transmission. If the forming information is an uplink measurement reference signal index, the user equipment may determine, based on a number of the uplink measurement reference signal index, a precoding matrix used for sending the uplink measurement reference signal at that time, and use the precoding matrix as a TP that is used by the user equipment in a current data transmission.

Similarly, if the forming information from the data port to the uplink measurement reference signal port is specifically a precoding matrix, the precoding matrix is a DP. If the forming information is specifically a PMI, the user equipment may determine a precoding matrix corresponding to the PMI by using the PMI, and use the precoding matrix as a DP that is used by the user equipment in a current data transmission. If the forming information is an uplink measurement reference signal index, the user equipment may determine, based on a number of the uplink measurement reference signal index, a precoding matrix used for sending the uplink measurement reference signal at that time, and use the precoding matrix as a DP that is used by the user equipment in a current data transmission.

Before the base station sends the uplink scheduling signaling to the user equipment, the base station may send one set or at least two sets of uplink measurement reference signal resource configuration information to the user equipment.

Then, the user equipment may send a plurality of uplink measurement reference signals to the base station. Different uplink measurement reference signals may correspond to different uplink measurement reference signal resource configuration information. When the base station needs to instruct the terminal to perform uplink data transmission, the base station may determine the forming information that is from the data port to the uplink measurement reference signal port by performing channel estimation once by using the uplink measurement reference signal. Alternatively, the base station may determine the forming information that is from the data port to the uplink measurement reference signal port by performing integrated channel estimation at least twice by using the uplink measurement reference signal that corresponds to one set of uplink measurement reference signal resource configuration information.

In part 402, the user equipment receives the uplink scheduling signaling, obtains the forming information that is from the uplink measurement reference signal port to the antenna port and the forming information that is from the data port to the uplink measurement reference signal port, separately parses the forming information that is from the uplink measurement reference signal port to the antenna port and the forming information that is from the data port to the uplink measurement reference signal port, and obtains a TP and a DP. The user equipment may preprocess a transmission signal based on synthesis of the TP and the DP, thereby transmitting data to the base station.

The foregoing mainly describes the solutions provided in the embodiments of the present invention from the perspective of interaction between network elements. It can be understood that, to implement the foregoing functions, the network elements such as the UE and the base station include corresponding hardware structures and/or software modules for performing various functions. A person skilled in the art should easily be aware that, in combination with examples of units and algorithms steps described in the embodiments disclosed in this specification, the present invention may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the present invention.

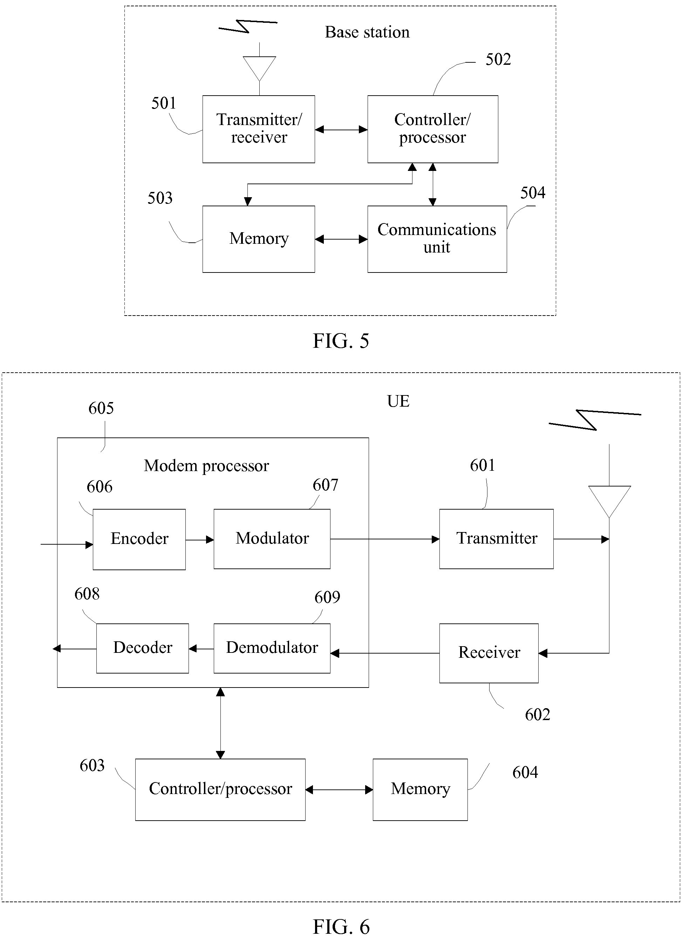

FIG. 5 is a possible schematic structural diagram of the base station in the foregoing embodiments.

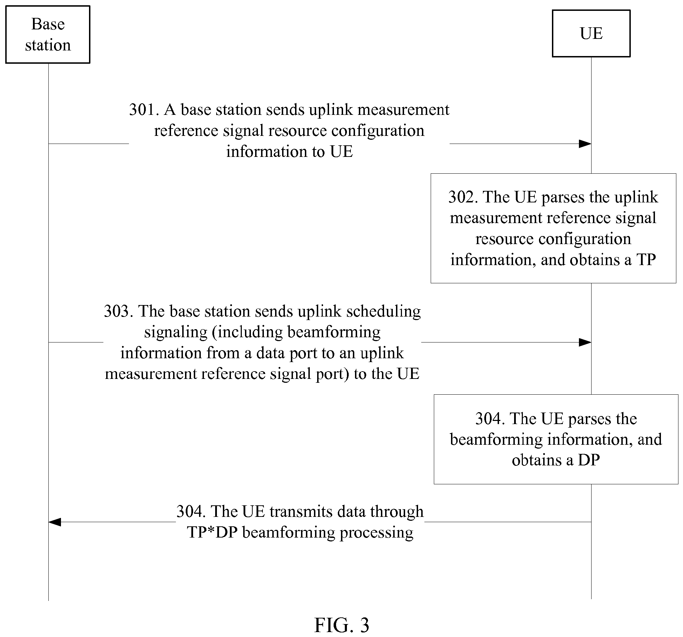

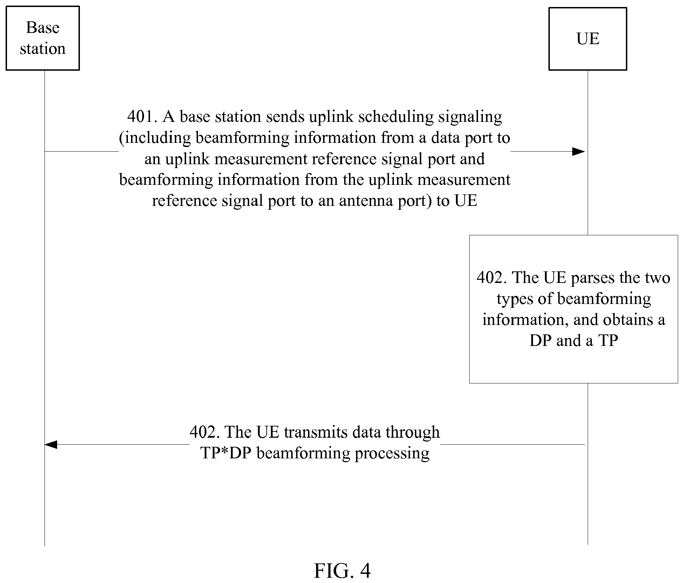

The base station includes a transmitter/receiver 501, a controller/processor 502, a memory 503, and a communications unit 504. The transmitter/receiver 501 is configured to: support the base station in receiving information from and sending information to the UE in the foregoing embodiments, and support the UE in performing radio communication with another UE. The controller/processor 502 executes various functions for communicating with the UE. On an uplink, an uplink signal from the UE is received by using an antenna, is demodulated by the receiver 501, and is further processed by the controller/processor 502, to recover service data and signaling information that are sent by the UE. On a downlink, service data and a signaling message are processed by the controller/processor 502 and are demodulated by the transmitter 501 to generate a downlink signal, and then the downlink signal is transmitted to the UE by using an antenna. The controller/processor 502 further performs a processing process related to the base station in FIG. 2 to FIG. 4 and/or another process used for the technology described in this application. For example, the controller/processor 502 is configured to control the base station to send forming information to the UE and/or perform another process of the technology described in the present invention. In an example, the controller/processor 502 is configured to support the base station in performing the processes 301 and 303 in FIG. 3 and the process 401 in FIG. 4. The memory 503 is configured to store program code and data of the base station. The communications unit 504 is configured to support the base station in communicating with another network entity.

It may be understood that FIG. 5 shows merely a simplified design of the base station. In an actual application, the base station may include any quantity of transmitters, receivers, processors, controllers, memories, communications units, and the like, and all base stations that can implement the present invention shall fall within the protection scope of the present invention.

FIG. 6 is a simplified schematic diagram of a possible design structure of the UE in the foregoing embodiments. The UE includes a transmitter 601, a receiver 602, a controller/processor 603, a memory 604, and a modem processor 605.

The transmitter 601 adjusts (for example, perform analog-to-digital conversion on, filters, amplifies, and up-converts) output sampling and generates an uplink signal. The uplink signal is transmitted to the base station in the foregoing embodiments by using an antenna. On a downlink, an antenna receives a downlink signal transmitted by the base station in the foregoing embodiments. The receiver 602 adjusts (for example, filters, amplifies, down-converts, and digitizes) a signal received from an antenna and provides input sampling. In the modem processor 605, an encoder 606 receives service data and a signaling message that are to be sent on an uplink, and processes (for example, formats, encodes, and interleaves) the service data and the signaling message. A modulator 607 further processes (for example, performs symbol mapping on and modulates) encoded service data and an encoded signaling message, and provides output sampling. A demodulator 609 processes (for example, demodulates) the input sampling and provides a symbol estimation. A decoder 608 processes (for example, de-interleaves and decodes) the symbol estimation and provides decoded data and a decoded signaling message that are to be sent to the UE. The encoder 606, the modulator 607, the demodulator 609, and the decoder 608 may be implemented by the combined modem processor 605. These units perform processing based on a radio access technology (for example, LTE, 5G, and an access technology of another evolved system) used in a radio access network.

The controller/processor 603 controls and manages actions of the UE and is configured to perform processing performed by the UE in the foregoing embodiments. For example, the controller/processor 603 is configured to control the UE to perform, based on received forming information, data transmission and/or another process f the technology described in the present invention. In an example, the controller/processor 603 is configured to support the UE in performing the processes 302 and 304 in FIG. 3 and the process 402 in FIG. 4. The memory 604 is configured to store program code and data used for the UE.

The controller/processor configured to implement the base station or the UE in the present invention may be a central processing unit (CPU), a general-purpose processor, a digital signal processor (DSP), an application-specific integrated circuit (ASIC), a field programmable gate array (FPGA) or another programmable logical device, a transistor logical device, a hardware component, or any combination thereof. The controller/processor may implement or execute various example logical blocks, modules, and circuits described with reference to content disclosed in the present invention. Alternatively, the processor may be a combination of processors implementing a computing function, for example, a combination of one or more microprocessors, or a combination of the DSP and a microprocessor.

Method or algorithm steps described in combination with the content disclosed in the present invention may be implemented by hardware, or may be implemented by a processor by executing a software instruction. The software instruction may include a corresponding software module. The software module may be stored in a RAM memory, a flash memory, a ROM memory, an EPROM memory, an EEPROM memory, a register, a hard disk, a removable hard disk, a CD-ROM, or a storage medium in any other forms well-known in the art. For example, a storage medium is coupled to a processor, so that the processor can read information from the storage medium or write information into the storage medium. Certainly, the storage medium may be a component of the processor. The processor and the storage medium may be located in the ASIC. In addition, the ASIC may be located in user equipment. Certainly, the processor and the storage medium may exist in the user equipment as discrete components.

A person skilled in the art should be aware that in the foregoing one or more examples, functions described in the present invention may be implemented by hardware, software, firmware, or any combination thereof. When the present invention is implemented by software, the foregoing functions may be stored in a computer-readable medium or transmitted as one or more instructions or code in the computer-readable medium. The computer-readable medium includes a computer storage medium and a communications medium, where the communications medium includes any medium that enables a computer program to be transmitted from one place to another. The storage medium may be any available medium accessible to a general-purpose or dedicated computer.

The objectives, technical solutions, and beneficial effects of the present invention are further described in detail in the foregoing specific implementations. It should be understood that the foregoing descriptions are merely specific implementations of the present invention, but are not intended to limit the protection scope of the present invention. Any modification, equivalent replacement, or improvement made based on the technical solutions of the present invention shall fall within the protection scope of the present invention.

## Claims

1. An uplink transmission method, comprising:
determining forming information that is from an uplink measurement reference signal port to an antenna port; and
sending, to user equipment, the forming information that is from the uplink measurement reference signal port to the antenna port.

2. The method according to claim 1, wherein the sending, to user equipment, the forming information that is from the uplink measurement reference signal port to the antenna port comprises one of the following cases:
sending, to the user equipment by using uplink scheduling signaling, a media access control MAC control element CE, or higher layer signaling, the forming information that is from the uplink measurement reference signal port to the antenna port.

3. The method according to claim 1 or 2, further comprising:
determining forming information that is from a data port to the uplink measurement reference signal port; and
sending, to the user equipment, the forming information that is from the data port to the uplink measurement reference signal port.

4. The method according to claim 3, wherein the sending, to the user equipment, the forming information that is from the data port to the uplink measurement reference signal port is specifically:
sending, to the user equipment by using uplink scheduling signaling, both the forming information that is from the data port to the uplink measurement reference signal port and the forming information that is from the uplink measurement reference signal port to the antenna port.

5. The method according to any one of claims 1 to 4, wherein the forming information is specifically a forming parameter, a codeword index, or an uplink measurement reference signal index.

6. An uplink transmission method, comprising:
receiving forming information that is from an uplink measurement reference signal port to an antenna port and that is sent by a base station; and
parsing the forming information that is from the uplink measurement reference signal port to the antenna port, and obtaining a forming parameter corresponding to the forming information.

7. The method according to claim 6, wherein the receiving forming information that is from an uplink measurement reference signal port to an antenna port and that is sent by a base station comprises one of the following cases:
receiving, by using uplink scheduling signaling, a media access control MAC control element CE, or higher layer signaling, the forming information that is from the uplink measurement reference signal port to the antenna port and that is sent by the base station.

8. The method according to claim 6 or 7, further comprising: receiving forming information that is from a data port to the uplink measurement reference signal port and that is sent by the base station.

9. The method according to claim 6 or 7, wherein the receiving forming information that is from a data port to the uplink measurement reference signal port and that is sent by the base station is specifically:
receiving, by using uplink scheduling signaling, both the forming information from the uplink measurement reference signal port to the antenna port and the forming information from the uplink measurement reference signal port to the antenna port that are sent by the base station.

10. The method according to claim 6, wherein the obtaining the forming information is specifically:
using, as forming information used for a current data transmission, a forming parameter corresponding to forming information that is used for the last transmission of an uplink measurement reference signal to the base station within X time units before the current data transmission.

11. The method according to any one of claims 6 to 10, wherein the forming information is specifically a forming parameter, a codeword index, or an uplink measurement reference signal resource index.

12. The method according to claim 11, wherein the obtaining a forming parameter corresponding to the forming information comprises one of the following cases:
determining, when the forming information is specifically a codeword index, a forming parameter corresponding to the codeword index; or
when the forming information is an uplink measurement reference signal index, determining, based on a number of the uplink measurement reference signal index, a forming parameter used for sending the uplink measurement reference signal, and using, as a forming parameter that is from the uplink measurement reference signal port to the antenna port and that is used by the user equipment in the current data transmission, the forming parameter used for sending the uplink measurement reference signal.

13. Abase station, comprising:
at least one processor, configured to determine forming information that is from an uplink measurement reference signal port to an antenna port; and
a transmitter, configured to send, to user equipment, the forming information that is from the uplink measurement reference signal port to the antenna port.

14. The base station according to claim 13, wherein the sending, to user equipment, the forming information that is from the uplink measurement reference signal port to the antenna port comprises one of the following cases:
sending, to the user equipment by using uplink scheduling signaling, a media access control MAC control element CE, or higher layer signaling, the forming information that is from the uplink measurement reference signal port to the antenna port.

15. The base station according to claim 13, wherein the at least one processor is further configured to determine forming information that is from a data port to the uplink measurement reference signal port; and
the transmitter is further configured to send, to the user equipment, the forming information that is from the data port to the uplink measurement reference signal port.

16. The base station according to claim 13, wherein the sending, to the user equipment, the forming information that is from the data port to the uplink measurement reference signal port is specifically:
sending, to the user equipment by using uplink scheduling signaling, both the forming information that is from the data port to the uplink measurement reference signal port and the forming information that is from the uplink measurement reference signal port to the antenna port.

17. The base station according to any one of claims 13 to 16, wherein the forming information is specifically a forming parameter, a codeword index, or an uplink measurement reference signal index.

18. User equipment UE, comprising:
a receiver, configured to receive forming information that is from an uplink measurement reference signal port to an antenna port and that is sent by a base station; and
at least one processor, configured to: parse the forming information that is from the uplink measurement reference signal port to the antenna port, and obtain a forming parameter corresponding to the forming information.

19. The UE according to claim 18, wherein the receiving forming information that is from an uplink measurement reference signal port to an antenna port and that is sent by a base station comprises one of the following cases:
receiving, by using uplink scheduling signaling, a media access control MAC control element CE, or higher layer signaling, the forming information that is from the uplink measurement reference signal port to the antenna port and that is sent by the base station.

20. The UE according to claim 18 or 19, wherein the receiver is further configured to receive forming information that is from a data port to the uplink measurement reference signal port and that is sent by the base station.

21. The UE according to claim 18, wherein the obtaining a forming parameter corresponding to the forming information is specifically:
using, as forming information used for a current data transmission, a forming parameter corresponding to forming information that is used for the last transmission of an uplink measurement reference signal to the base station within X time units before the current data transmission.

22. The UE according to claim 18, wherein the obtaining a forming parameter corresponding to the forming information comprises one of the following cases:
determining, when the forming information is specifically a codeword index, a forming parameter corresponding to the codeword index; or
when the forming information is an uplink measurement reference signal index, determining, based on a number of the uplink measurement reference signal index, a forming parameter used for reporting the uplink measurement reference signal, and using, as the forming information that is from the uplink measurement reference signal port to the antenna port and that is used by the user equipment in a current data transmission, the forming parameter used for reporting the uplink measurement reference signal.

23. A communications system, comprising the base station according to any one of claims 14 to 17 and the user equipment UE according to any one of claims 18 to 22.
